# EUROPEAN PATENT SPECIFICATION

(11) **EP 1 368 971 B1**
(45) Date of publication and mention of the grant of the patent: **28.11.2007**
(21) Application number: 02703765.4
(22) Date of filing: 13.03.2002
(51) Int. Cl.: H04N 7/18, H04N 13/00

(54) **SYSTEM FOR MULTIPLE VIEWPOINT VIDEO SIGNAL RECORDING AND REPRODUCTION**
SYSTEM ZUR AUFNAHME UND WIEDERGABE VON VIDEOSIGNALE AUS MEHRERE STANDPÜNKTE
SYSTEME D'ENREGISTREMENT DE POINTS DE VUE MULTIPLES EN DIRECT ET LECTURE DE SIGNAL EN DIRECT OU ENREGISTRE D'IMAGES

(30) Priority: 15.03.2001 GR 2001100127
(43) Date of publication of application: 10.12.2003
(73) Proprietor: Konstantinidis, Apostolos, 116 32 Athens (GR)
(72) Inventor: Konstantinidis, Apostolos, 116 32 Athens (GR)
(74) Representative: Samuelides, Emmanuel
(86) International application number: PCT/GR2002/000015
(87) International publication number: WO 2002/076093

(56) References cited:
- WO-A-97/43681
- US-A- 5 130 794
- US-A- 5 729 471
- US-A- 6 084 979
- US-A- 6 148 100
- PATENT ABSTRACTS OF JAPAN vol. 1998, no. 13, 30 November 1998 (1998-11-30) & JP 10 210506 A (SONY CORP), 7 August 1998 (1998-08-07) & US 6 326 994 B1 4 December 2001 (2001-12-04)
- PATENT ABSTRACTS OF JAPAN vol. 2000, no. 03, 30 March 2000 (2000-03-30) & JP 11 341517 A (NIPPON TELEGR &TELEPH CORP <NTT>), 10 December 1999 (1999-12-10)

## Description

System for capturing multiple viewpoints simultaneously of the same subject (event), as well as a method for viewing these multiple viewpoints. The choice of every possible viewpoint is done on user demand in real-time.

Up to now the recording or live TV broadcasting of a subject whether it is done by one or more cameras it always results in broadcasting only the director's choice of viewing angle and never the spectator's.

This particular invention has two aspects:
1^{st} The simultaneous filming (image capture) of multiple cameras, from different viewing angles (viewpoints) and the TV broadcasting or recording of all these images.
2^{nd} The spectator's choice of viewing any of the above mentioned signals according to his taste on command.

The method for recording and transmitting images of an event according to the invention, comprises the steps as set out in claim 11.

The selection of the transmitted images is performed continuously according to the user's choice (viewpoint) in real-time.

The system of multiple simultaneous capturing and playback of visual images according to the invention is set out in claim 1.

Other optional features of the invention are presented in the depended claims. For example the user-input system for selecting camera viewpoint may consist of a hand operated device such as a mouse or a joystick, a head tracking motion detector unit a pupil motion detector unit, a voice activated command system. Further the user-input system may transfer commands from the users neural system.

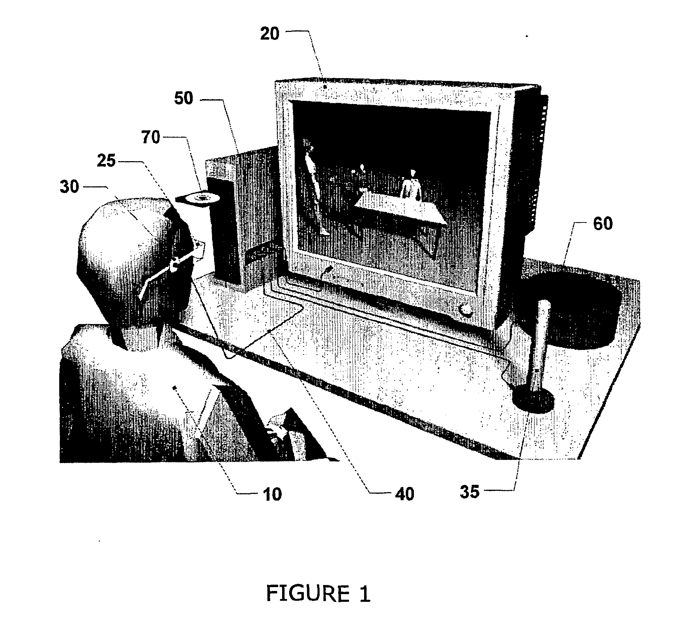

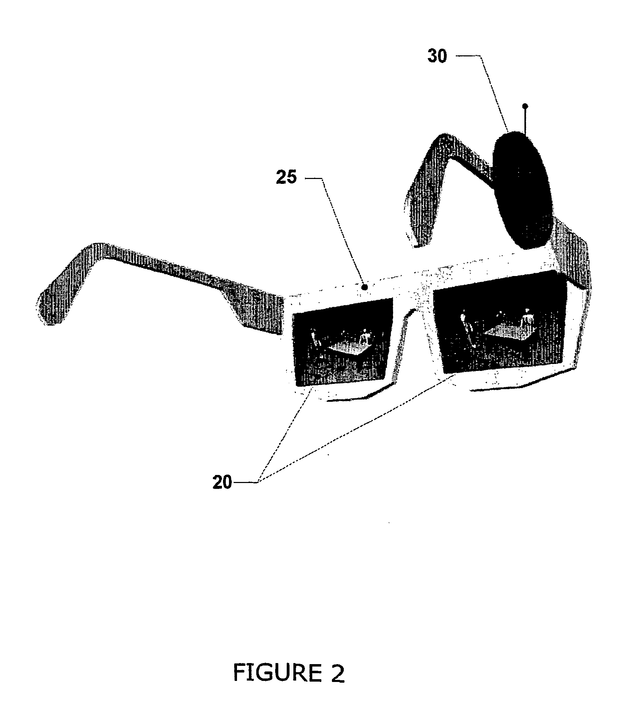

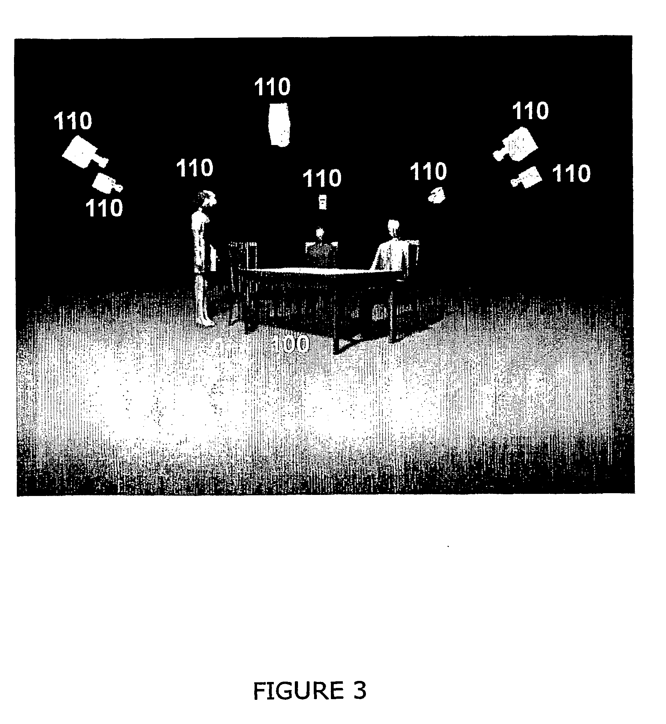

An embodiment of the invetion is presented below and in figures 1 to 3, where
➢ figure 1 presents the a viewer using a system according to the invention in combination with a screen,
➢ figure 2 presents the a viewer using a system according to the invention in combination with equipped with screens,
➢ figure 3 presents an example of a system for the simultaneoous capturing.

The simultaneous recording can be accomplished by any number of cameras (varying from 2 to 100 or even more) (110) arranged in a circular manner in order to cover every possible position that the spectator could have been viewing the show (100) if his was actually there.

The cameras in each of these positions could be installed in pairs (left and right) so that each viewpoint could be stereoscopic. In such a case these two cameras will be slightly apart observing the same target. At playback time these two signals will be separated and presented to each of the spectator's eyes separately, (left camera to left eye -right camera to right eye) using an appropriate device such as shutter glasses or equivalent.

The arrangement of each camera position (110) can be spherical or cylindrical or part of a sphere.

In every position it is possible that there can be more than one camera e.g. a number of cameras arranged in different tilt or roll angles while others can be set in different zoom settings. As far as the zoom is concerned this can be accomplished digitally when requested by the user.

When the viewer (10) starts the use of the system he can see in his screen (20) the signal of the central camera. If he wants to see from the left of that view he only has to register in the system his intention. This "input" can be accomplished either by hand (Joystick - mouse) (35) or/and with a head motion tracking device (30) or even with a device of eye's pupil motion tracking device or voice activated command or a system that will recognize and transfer the command from the users neural system or any other way, provided there is appropriate interface device.

No matter which of the above controlling device is used, the object is to select the viewpoint that he wants to examine the spectacle. This user (10) input is directed with the appropriate interface (40) in the computer system (50) where the specialized software (70) selects the signal from live broadcast or the prerecorded event (60) that corresponds to the closest camera position and switches the projection to this viewpoint (80).

Provided that the system is stereoscopic as described previously the projection can be stereoscopic also with the use of the appropriate device e.g. the left and right separation of images using 3D shutter glasses or polarized glasses or a similar device equipped with one LCD screen one for each eye.

The projection system (50) and the processing (20) or (25) unit can be either one integrated device or two separate units.

Such a project is fisible to materialize due to the significantly small size of new cameras and mostly due to the large storage capacity of new magnetic media technology and the use of adequate compression technology.

### List of reference signs (figures 1 to 3)

(10) The user (viewer) of the system
(20) Projection screen of the system
(25) Twin screens (stereoscopic capable projection) eyewear size.
(30) Head motion-tracking device
(35) Traditional input device with the use of a mouse or joystick
(40) Connection of user input devices (cable or wireless)
(50) Processing Unit
(60) Multiple signal receiver unit (TV version) or Multiple video storage unit (Video Version)
(70) Software for selecting multiple viewpoints
(100) Subject for live broadcast of recording
(110) Twin Camera (stereoscopic) or single or many stereoscopic or single, pointed to different directions.

## Claims

1. System of multiple simultaneous capturing and playback of visual images of an event comprising:
➢ a plurality of cameras (110) to capture an entire collection of sets of visual images of the event from different viewpoints, whereby each set of visual images corresponds to a viewpoint;
**➢** a system of transmission in real-time of the entire collection of the sets of visual images; and
➢ a viewer's unit including a monitoring system (20, 25), a viewer-input system (30, 35) for the real-time selection of a viewpoint, a processing unit (50), and a system for transferring the viewer-input (40) into the processing unit (50);
**characterized in that** it further comprises
➢ a plurality of pairs of cameras consisting of a left camera and a right camera for the purpose of stereoscopic capability;
➢ a system of transmission in real-time of the entire collection of the sets of visual images to the viewer's unit; and
➢ communication means (70) to select and transmit to the monitoring system (20, 25) the set of visual images from the entire collection of sets of visual images, which corresponds to the selected viewpoint.

2. System of multiple simultaneous capturing and playback of visual images according to claim 1, whereby the viewer-input system (30, 35) for selecting camera visual images consists of a hand operated device such as a mouse or a joystick.

3. System of multiple simultaneous capturing and playback of visual images according to claim 1, whereby the viewer-input apparatus for selecting camera visual images consists of a head tracking motion detector unit (30).

4. System of multiple simultaneous capturing and playback of visual images according to claim 1, whereby the viewer-input apparatus for selecting camera visual images consists of a pupil motion detector unit.

5. System of multiple simultaneous capturing and playback of visual images according to claim 1, whereby the viewer-input apparatus for selecting camera visual images consists of a voice activated command system.

6. System of multiple simultaneous capturing and playback of visual images according to claim 1, whereby the viewer-input apparatus for selecting camera visual images consists of a system that will recognize and transfer the command from the viewer's neural system.

7. System of multiple simultaneous capturing and playback of visual images according to claim 1, whereby each camera of the plurality of cameras are positioned in a spherical or part of a spherical arrangement.

8. System of multiple simultaneous capturing and playback of visual images according to claim 1, whereby the monitoring system has one viewing screen.

9. System of multiple simultaneous capturing and playback of visual images according to claim 1, whereby the monitoring system has a pair of viewing screens of stereoscopic capability (25).

10. System of multiple simultaneous capturing and playback of visual images according to claim 1, whereby the monitoring system, has a twin-set of viewing screens and a pair of glasses of stereoscopic capability.

11. Method for recording and transmitting visual images of an event, comprising the following steps:
a. simultaneous capturing a plurality of sets of visual images of the event from different viewpoints, using a plurality of cameras, whereby each set of visual images corresponds to a camera;
b. providing a viewer's unit including a monitoring system (20, 25), a viewer-input system (30, 35) for the real-time selection of a viewpoint, a processing unit (50), and a system for transferring the viewer-input (40) into the processing unit (50);
c. defining the viewer's viewpoint;
d. transmitting images of the event to a monitoring system (20-25), whereby the images correspond on the viewer's choice of the viewpoint, which is entered to a user input system (40);
**characterized in that**
e. the simultaneous capturing of the plurality of sets of visual images of the event from different viewpoints, is effected using a plurality of pairs of cameras, which consist of a left camera and a right camera, for the purpose of stereoscopic capability; and
f. **in that** the method further comprises the step of transmitting in real-time the entire collection of the sets of visuals images captured by the plurality of camera's to the viewer's unit, and selecting a set of visual images in real-time from the entire collection of the sets of visual images, to transmit to a monitoring-system (20, 25), whereby the selection corresponds on the viewer's choice of the viewpoint.

## Patentansprüche

1. System zur simultanen Mehrfach-Erfassung und -Wiedergabe von visuellen Bildern eines Ereignissen, mit:
- einer Vielzahl von Kameras (110) zur Erfassung einer gesamten Sammlung von Sätzen von visuellen Bildern des Ereignisses von verschiedenen Standpunkten, wobei jeder Satz von visuellen Bildern einem Standpunkt entspricht;
- einem System zur Echtzeit-Übertragung der gesamten Sammlung von Sätzen von visuellen Bildern; und
- einer Betrachter-Einheit mit einem Betrachtungssystem (20, 25), einem Betrachter-Eingabesystem (30, 35) zur Echtzeit-Auswahl eines Standpunktes, einer Verarbeitungseinheit (50) und einem System zur Übertragung der Betrachter-Eingabe (40) in die Verarbeitungseinheit (50);
**dadurch gekennzeichnet, dass** das System ferner aufweist:
- eine Vielzahl von Paaren von Kameras, die eine linke Kamera und eine rechte Kamera mit Stereoskopie-Eigenschaft beinhalten;
- ein System zur Echtzeit-Übertragung der gesamten Sammlung von Sätzen von visuellen Bildern zu der Betrachter-Einheit; und
- Kommunikationseinrichtungen (70), um den Satz von visuellen Bildern von der gesamten Sammlung von Sätzen von visuellen Bildern, der dem ausgewählten Standpunkt entspricht, auszuwählen und zu dem Betrachtungssystem (20, 25) zu übertragen.

2. System zur simultanen Mehrfach-Erfassung und -Wiedergabe von visuellen Bildern nach Anspruch 1, wobei das Betrachter-Eingabesystem (30, 35) zum Auswählen von visuellen Kamerabildern eine handbetätigte Vorrichtung beinhaltet, wie zum Beispiel eine Maus oder ein Joystick.

3. System zur simultanen Mehrfach-Erfassung und -Wiedergabe von visuellen Bildern nach Anspruch 1, wobei die Betrachter-Eingabevorrichtung zum Auswählen von visuellen Kamerabildern eine Kopfbewegungsverfolgungsdetektoreinheit (30) beinhaltet.

4. System zur simultanen Mehrfach-Erfassung und -Wiedergabe von visuellen Bildern nach Anspruch 1, wobei die Betrachter-Eingabevorrichtung zum Auswählen von visuellen Kamerabildern eine Pupillenbewegungsdetektoreinheit beinhaltet.

5. System zur simultanen Mehrfach-Erfassung und -Wiedergabe von visuellen Bildern nach Anspruch 1, wobei die Betrachter-Eingabevorrichtung zum Auswählen von visuellen Kamerabildern ein sprachaktiviertes Befehlssystem beinhaltet.

6. System zur simultanen Mehrfach-Erfassung und -Wiedergabe von visuellen Bildern nach Anspruch 1, wobei die Betrachter-Eingabevorrichtung zum Auswählen von visuellen Kamerabildern ein System beinhaltet, das den Befehl von einem neuronalen System des Betrachters empfängt und überträgt.

7. System zur simultanen Mehrfach-Erfassung und -Wiedergabe von visuellen Bildern nach Anspruch 1, wobei jede Kamera der Vielzahl von Kameras in einer sphärischen oder teilsphärischen Anordnung positioniert ist.

8. System zur simultanen Mehrfach-Erfassung und -Wiedergabe von visuellen Bildern nach Anspruch 1, wobei das Betrachtungssystem einen Bildschirm beinhaltet.

9. System zur simultanen Mehrfach-Erfassung und -Wiedergabe von visuellen Bildern nach Anspruch 1, wobei das Betrachtungssystem ein Paar Bildschirme (25) mit Stereoskopie-Eigenschaft umfasst.

10. System zur simultanen Mehrfach-Erfassung und -Wiedergabe von visuellen Bildern nach Anspruch 1, wobei das Betrachtungssystem einen Zwillingssatz von Bildschirmen und eine Brille mit Stereoskopie-Eigenschaft umfasst.

11. Verfahren zum Aufzeichnen und Übertragen von visuellen Bildern eines Ereignissen, mit den folgenden Schritten:
a. simultanes Erfassen einer Vielzahl von Sätzen von visuellen Bildern des Ereignisses von verschiedenen Standpunkten unter Verwendung einer Vielzahl an Kameras, wobei jeder Satz von visuellen Bildern einer Kamera entspricht;
b. Vorsehen einer Betrachter-Einheit mit einem Betrachtungssystem (20, 25), einem Betrachter-Eingabesystem (30, 35) zur Echtzeit-Auswahl eines Standpunktes, einer Verarbeitungseinheit (50) und einem System zur Übertragung der Betrachter-Eingabe (40) in die Verarbeitungseinheit (50);
c. Definieren des Standpunktes des Betrachters;
d. Übertragen der Bilder von dem Ereignis zu einem Betrachtungssystem (20, 25), wobei die Bilder der Auswahl der Standpunktes durch den Betrachter entsprechen, die in eine Benutzer-Eingabesystem (40) eingegeben wird;
**dadurch gekennzeichnet, dass**
e. das simultane Erfassen der Vielzahl von Sätzen von visuellen Bildern des Ereignisses von verschiedenen Standpunkten unter Verwendung von einer Vielzahl von Paaren von Kameras durchgeführt wird, die eine linke Kamera und eine rechte Kamera mit Stereoskopie-Eigenschaft beinhalten; und
f. das Verfahren ferner den Schritt der Echtzeit-Übertragung der gesamten Sammlung der Sätze von visuellen Bildern, die durch die Vielzahl von Kameras erfasst werden, zu der Betrachter-Einheit und das Auswählen eines Satzes von visuellen Bildern in Echtzeit aus der gesamten Sammlung der Sätze von visuellen Bildern umfasst, um zu einem Betrachtungssystem (20, 25) übertragen zu werden, wobei die Auswahl der Auswahl des Betrachters hinsichtlich des Standpunktes entspricht.

## Revendications

1. Système pour la capture et la relecture simultanées multiples d'images visuelles d'un événement, comprenant :
- plusieurs caméras (110) afin de capturer toute une collection d'ensembles d'images visuelles de l'événement depuis différents points de vue, chaque ensemble d'images visuelles correspondant à un point de vue ;
- un système de transmission en temps réel de toute la collection des ensembles d'images visuelles ; et
- une unité de spectateur comprenant un système de contrôle (20, 25), un système d'entrée du spectateur (30, 35) pour la sélection en temps réel d'un point de vue, une unité de traitement (50) et un système pour transférer l'entrée du spectateur (40) dans l'unité de traitement (50) ;
**caractérisé en ce qu'**il comprend en outre :
- plusieurs paires de caméras comprenant une caméra gauche et une caméra droite à des fins de capacité stéréoscopique ;
- un système de transmission en temps réel de toute la collection d'ensembles d'images visuelles vers l'unité du spectateur ; et
- des moyens de communication (70) pour choisir et transmettre au système de contrôle (20, 25) l'ensemble d'images visuelles, parmi toute la collection d'ensembles d'images visuelles, qui correspond au point de vue choisi.

2. Système pour la capture et la relecture simultanées multiples d'images visuelles selon la revendication 1, dans lequel le système d'entrée du spectateur (30, 35) pour choisir des images visuelles de caméras consiste en un dispositif actionné à la main comme une souris ou une manette.

3. Système pour la capture et la relecture simultanées multiples d'images visuelles selon la revendication 1, dans lequel l'appareil d'entrée du spectateur pour choisir des images visuelles de caméras comprend une unité de détection de mouvement et de suivi de tête (30).

4. Système pour la capture et la relecture simultanées multiples d'images visuelles selon la revendication 1, dans lequel l'appareil d'entrée du spectateur pour choisir des images visuelles de caméras comprend une unité de détection de mouvement de pupille.

5. Système pour la capture et la relecture simultanées multiples d'images visuelles selon la revendication 1, dans lequel l'appareil d'entrée du spectateur pour choisir des images visuelles de caméras comprend un système de commande à activation vocale.

6. Système pour la capture et la relecture simultanées multiples d'images visuelles selon la revendication 1, dans lequel l'appareil d'entrée du spectateur pour choisir des images visuelles de caméras comprend un système qui va reconnaître et transférer l'instruction depuis le système neuronal du spectateur.

7. Système pour la capture et la relecture simultanées multiples d'images visuelles selon la revendication 1, dans lequel chaque caméra parmi lesdites plusieurs caméras est placée selon une disposition sphérique ou partiellement sphérique.

8. Système pour la capture et la relecture simultanées multiples d'images visuelles selon la revendication 1, dans lequel le système de contrôle comprend un écran de visualisation.

9. Système pour la capture et la relecture simultanées multiples d'images visuelles selon la revendication 1, dans lequel le système de contrôle comprend deux écrans de visualisation en vue d'une capacité stéréoscopique (25).

10. Système pour la capture et la relecture simultanées multiples d'images visuelles selon la revendication 1, dans lequel le système de contrôle comprend un double ensemble d'écrans de visualisation et une paire de verres à capacité stéréoscopique.

11. Procédé d'enregistrement et de transmission d'images visuelles d'un événement, comprenant les étapes suivantes :
a. capturer simultanément plusieurs ensembles d'images visuelles de l'événement depuis plusieurs points de vue en utilisant plusieurs caméras, chaque ensemble d'images visuelles correspondant à une caméra ;
b. utiliser une unité de spectateur comprenant un système de contrôle (20, 25), un système d'entrée du spectateur (30, 35) pour la sélection en temps réel d'un point de vue, une unité de traitement (50) et un système pour transférer l'entrée du spectateur (40) dans l'unité de traitement (59) ;
c. définir le point de vue du spectateur ;
d. transmettre des images de l'événement vers un système de contrôle (20-25), les images correspondant au choix du point de vue du spectateur qui est entré en utilisant le système d'entrée (40) de l'utilisateur ;
**caractérisé en ce que** :
e. la capture simultanée desdits plusieurs ensembles d'images visuelles de l'événement depuis plusieurs points de vue se fait en utilisant plusieurs paires de caméras comprenant une caméra gauche et une caméra droite à des fins de capacité stéréoscopique ; et **en ce que**
f. le procédé comprend une étape consistant à transmettre en temps réel toute la collection d'ensembles d'images visuelles capturées par lesdites plusieurs caméras à l'unité du spectateur, et à choisir un ensemble d'images visuelles en temps réel, parmi toute la collection d'ensembles d'images visuelles, à transmettre au système de contrôle (20-25), la sélection correspondant au choix de point de vue du spectateur.
